# EUROPÄISCHE PATENTSCHRIFT

(11) **EP 2 922 641 B1**
(45) Veröffentlichungstag und Bekanntmachung des Hinweises auf die Patenterteilung: **19.04.2017**
(21) Anmeldenummer: 13786451.8
(22) Anmeldetag: 28.10.2013
(51) Int. Cl.: B05C 17/005, B05C 17/01, F16N 11/08, F16N 29/00, H02P 7/00, H02P 7/29, H02P 23/00, H02P 23/14

(54) **VERFAHREN ZUR DOSIERTEN ABGABE VON SCHMIERFETT MITTELS EINES SCHMIERSTOFFSPENDERS**
METHOD FOR METERED FEEDING OF LUBRICATING GREASE BY MEANS OF A LUBRICATOR
PROCÉDÉ POUR L'ALIMENTATION DOSÉE EN GRAISSE AVEC UN GRAISSEUR

(30) Priorität: 23.11.2012 DE 102012111376
(43) Veröffentlichungstag der Anmeldung: 30.09.2015
(73) Patentinhaber: Perma-Tec GmbH & Co. KG, 97717 Euerdorf (DE)
(72) Erfinder: LEHNERT, Jochen, 97618 Niederlauer (DE); GROM, Manfred, 97223 Schlimpfhof (DE); HAUPT, Thomas, 97705 Burkardroth (DE); EISENBACHER, Egon, 97753 Karlstadt (DE)
(74) Vertreter: von dem Borne, Andreas
(86) Internationale Anmeldenummer: PCT/EP2013/072523
(87) Internationale Veröffentlichungsnummer: WO 2014/079658

(56) Entgegenhaltungen:
- EP-A2- 2 120 326
- WO-A2-2004/072130
- DE-A1-102005 016 259
- DE-A1-102008 004 382
- DE-A1-102011 085 551
- DE-U1- 9 214 096
- FR-A1- 2 940 551
- US-A1- 2008 300 827
- US-A1- 2012 098 477
- US-B1- 6 215 969

## Beschreibung

Die Erfindung betrifft ein Verfahren zur dosierten Abgabe von Schmierfett mittels eines Schmierstoffspenders, der eine mit Schmierfett gefüllte Schmierstoffkartusche mit einem Kolben zum Ausdrücken des Schmierfetts, eine von einem Gleichstrom-Getriebemotor angetriebene Spindel zur Bewegung des Kolbens, eine Spannungsquelle und eine Steuerelektronik zur Ansteuerung des Motors mit einem Microcontroller und einer Einrichtung zur Unterbrechung des durch den Motor fließenden Motorstromes aufweist.

Um eine präzise Dosierung vornehmen zu können, ist es notwendig, den Stellweg des Kolbens genau zu kennen. Abweichungen von der vorgegebenen Spendedosierung können einen unwirtschaftlichen Schmiermittelverbrauch einerseits oder Mangelschmierung - und in Folge dessen Lagerschäden - nach sich ziehen. Daher werden gegenwärtig in gattungsgemäßen Schmierstoffspendern aufwendige Messeinrichtungen verwendet, welche den Stellweg des Kolbens oder die Anzahl der von der Spindel absolvierten Umdrehungen registrieren. Derartige Messeinrichtungen behindern die kompakte Konstruktion der Schmierstoffspender, erzeugen zusätzliche Kosten und sind mitunter anfällig für äußere Störungen.

Die DE 103 06 329 A1 offenbart ein Verfahren zur Steuerung eines Gleichstrommotors, der einen Stellantrieb antreibt. Dabei wird der kumulierte Drehwinkel des Gleichstrommotors aus dessen Betriebswerten berechnet und der Motor bei einem errechneten Winkel durch Kurzschluss abgebremst. Die Motorsteuerung ist für ein hochdynamisches Stellsystem bestimmt, in dem der Bremsweg einen wesentlichen Anteil des genannten Stellweges ausmacht, insbesondere für ein Lenkschloss, eine Tür, einen Deckel oder eine Klappe in Kraftfahrzeugen.

Die DE 10 2005 016259 offenbart ein weiteres Verfahren zur Steuerung eines Gleichstrommotors, der einen Stellantrieb antreibt. Vor diesem Hintergrund liegt der Erfindung die Aufgabe zugrunde, ein möglichst einfaches und kostengünstig zu implementierendes Verfahren zur dosierten Abgabe von Schmierfett mittels eines Schmierstoffspenders anzugeben. Lösung dieser Aufgabe und Gegenstand der Erfindung ist ein Verfahren nach Anspruch 1.

Der Schmierstoffspender weist eine mit Schmierfett gefüllte Schmierstoffkartusche mit einem Kolben zum Ausdrücken des Schmierfetts, eine von einem Gleichstrom-Getriebemotor angetriebene Spindel zur Bewegung des Kolbens, eine Spannungsquelle und eine Steuerungselektronik zur Ansteuerung des Motors mit einem Microcontroller und einer Einrichtung zur Unterbrechung des durch den Motor fließenden Motorstromes auf. Der Motor wird von der Steuerelektronik in einstellbaren Zeitintervallen in Betrieb gesetzt, wobei eine Spendemittelteilmenge durch eine Kolbenbewegung mit einem definierten Kolbenhub aus der Kartusche ausgedrückt wird. Während des Motorbetriebs werden erfindungsgemäß der Motorstrom und die Motorspannung gemessen und wird mit den Strom- und Spannungsmesswerten sowie zumindest einer Motorkenngröße die Motorlaufzeit berechnet, die zur Erzeugung des Kolbenhubs benötigt wird. Wenn die Motorbetriebszeit die errechnete Motorlaufzeit erreicht, wird der Motorstrom unterbrochen. Hierbei bezeichnen Motorstrom und Motorspannung die im Wesentlichen über dem Motor abfallende Spannung bzw. den durch den Motor fließenden elektrischen Strom. Als Motorkenngrößen werden insbesondere der Ankerwiderstand und eine empirisch zu bestimmende allgemeine Motorkonstante, welche die magnetische Feldstärke eines im Elektromotor verbauten Permanentmagneten, geometrische Einflussgrößen der Spulenanordnung, Lagerwiderstände und dergleichen erfasst, berücksichtigt.

Gemäß einer bevorzugten Ausgestaltung des erfindungsgemäßen Verfahrens wird die Umgebungstemperatur gemessen und wird mit einer in der Steuerelektronik abgespeicherten Temperaturfunktion die eine temperaturabhängige Motorkenngröße berechnet. Dazu weist die Steuerelektronik zweckmäßigerweise einen Temperatursensor auf. Dieser kann auch direkt in den Microcontroller integriert sein. Die Temperaturfunktion kann beispielsweise als Rechenanweisung hinterlegt sein. Ferner kann in einem Speicher des Microcontrollers eine Wertetabelle gespeichert werden, aus der abhängig vom Eingabewert einzelne Werte der Tabelle bzw. dazwischen interpolierte Werte ausgegeben werden.

Die Einrichtung zur Unterbrechung des Motorstromes kann beispielweise durch einen Bipolar-Transistor, einen Feldeffekttransistor, vorzugsweise einen Metalloxid-Halbleiter-Feldeffekttransistor, oder auch durch ein Relais gebildet sein. Dabei lassen sich Transistoren sehr platzsparend verbauen und können sogar in einen Mikrokontroller integriert sein. Erfindungsgemäß wird in einer Betriebsphase während des Motorlaufs die über den Motor abfallende Spannung mittels Pulsweitenmodulation auf einen Sollwert eingestellt. Die Pulsweitenmodulation stellt ein übliches Verfahren dar, um einen elektrischen Verbraucher mit nur einem Teil der von einer Spannungsquelle gelieferten Spannung ohne Verlust von elektrischer Energie zu versorgen. Wird die Spannung über einen Regelkreis auf einen Sollwert eingestellt, ist die Ausgangsspannung weitgehend unabhängig von der Versorgungsspannung. Dies ist insbesondere bei Anwendungen interessant, welche von elektrischen Zellen gespeist werden, da deren Spannung im Laufe eines Lebenszyklus' nachlässt.

Bevorzugt wird die tatsächliche Motorspannung in kurzen Zeitabständen gemessen. Für eine effektive Regelung sind für die vorliegende Anwendung Abstände in der Größenordnung von 10 ms zweckmäßig.

Um ein sicheres und schnelles Anlaufen des Elektromotors zu gewährleisten, ist es weiterhin vorteilhaft, während einer der Betriebsphase vorangehenden Anlaufphase einen höheren Spannungswert als die Sollspannung der Betriebsphase an den Motor anzulegen. Damit soll die Phase, in welcher der Motor noch nicht mit Solldrehzahl läuft, möglichst kurz gehalten werden. Weiterhin wird vermieden, dass der Motor aufgrund reduzierter Leistung und mechanischer Anlaufhindernisse nicht oder nur zögernd in Gang kommt.

In einer bevorzugten Ausgestaltung des erfindungsgemäßen Verfahrens wird die Sollspannung während der Betriebsphase abhängig vom Typ der Schmierstoffkartusche gewählt. Üblicherweise existieren für unterschiedliche Anwendungen Schmierstoffkartuschen mit unterschiedlich großen Schmierstoffreservoirs. Zu unterschiedlichen Kartuschengrößen korrespondieren dabei jeweils auch unterschiedliche Spendendosen. Da bei einer höheren Versorgungsspannung - und daraus folgend einer höheren Motordrehzahl - die Spende zwar schneller erfolgt, aber auch die Spendengenauigkeit reduziert wird, ist es vorteilhaft, für die einzelnen Kartuschentypen unterschiedliche Betriebsspannungen vorzusehen, welche einen bestmöglichen Kompromiss zwischen Spendegeschwindigkeit und Spendegenauigkeit darstellen. Erfindungsgemäß wird der Motor nach Ablauf der Betriebsphase nicht zur Abbremsung kurzgeschlossen. Ein derartiger Kurzschluss ist nicht notwendig, da der Elektromotor aufgrund des großen mechanischen Widerstandes durch Spindel, Kolben und Schmierfett praktisch sofort oder zumindest einer kurzen Verzögerung zum Stillstand kommt, sobald keine Versorgungsspannung mehr anliegt. Auch eine Überlastung der Elektronik durch Kurzschlussströme kann vermieden werden.

Die Erfindung soll im Folgenden in einem Ausführungsbeispiel erläutert werden. Es zeigen schematisch
- Fig. 1: einen Längsschnitt durch einen Schmierstoffspender zur Durchführung des erfindungsgemäßen Verfahrens,
- Fig. 2: ein vereinfachtes Schaltbild der Motorsteuerung und
- Fig. 3: den zeitlichen Verlauf der vom Microcontroller angesteuerten Motorspannung während eines Spendevorgangs.

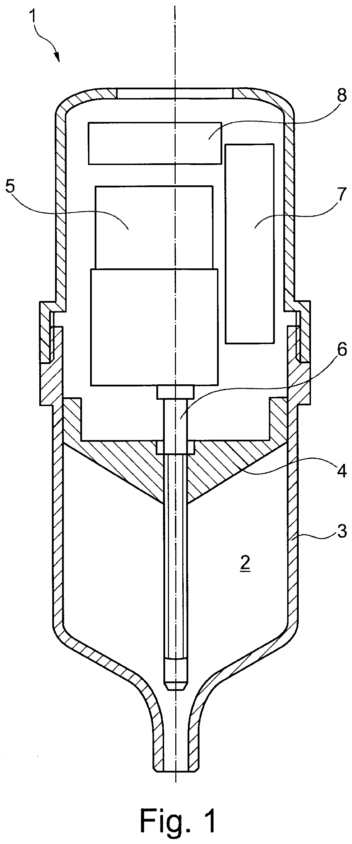

Figur 1 zeigt einen Längsschnitt durch einen Schmierstoffspender 1, der eine mit Schmierfett 2 gefüllte Schmierstoffkartusche 3 aufweist. In der Schmierstoffkartusche 3 befindet sich ein Kolben 4 zum Ausdrücken des Schmierfetts 2, eine von einem Gleichstromgetriebemotor 5 angetriebene Spindel 6 zur Bewegung des Kolbens 4, eine Spannungsquelle 7 und eine Steuerelektronik 8 zur Ansteuerung des Motors 5.

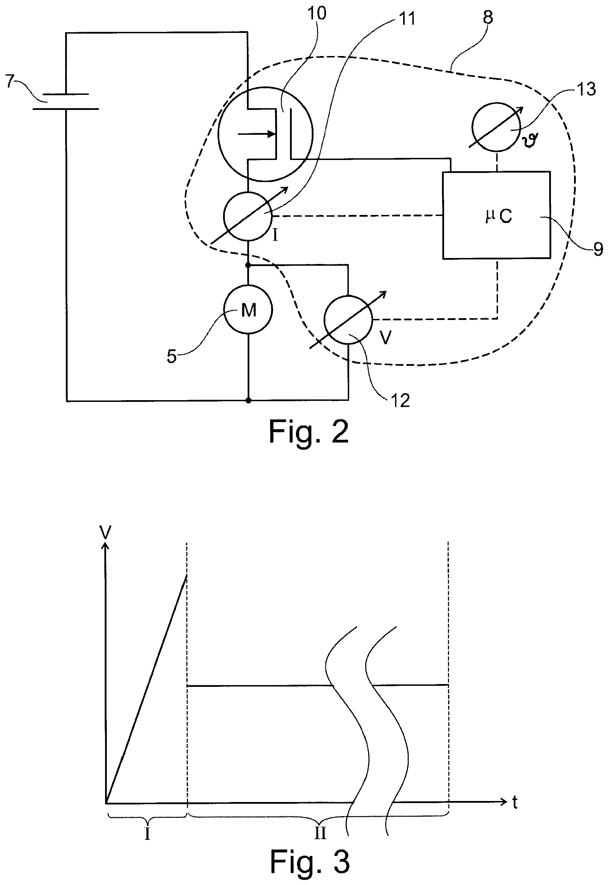

Dem Schaltbild in Figur 2 entnimmt man, dass die Steuerelektronik 8 einen Microcontroller 9, eine Einrichtung 10 zur Unterbrechung des durch den Motor fließenden Motorstromes, eine Strommesseinrichtung 11 zur Messung des tatsächlichen Motorstromes und eine Spannungsmesseinrichtung 12 zur Messung der über dem Motor abfallenden Spannung aufweist. Weiterhin zeigt das Schaltbild den Motor 5 und die Spannungsquelle 7. Der Motor 5 wird in einstellbaren Zeitintervallen von der Steuerelektronik 8 in Betrieb gesetzt. Dazu schließt der Microcontroller 9 durch ein entsprechendes Steuersignal an die Einrichtung 10 den Stromkreis. Durch den Motor 5 wird die Spindel 6 gedreht und der Kolben 4 in Bewegung gesetzt. Durch einen definierten Hub des Kolbens 4 wird eine Teilmenge des Schmierfetts 2 aus der Kartusche 3 ausgedrückt. Während des Motorbetriebs wird der Motorstrom und die Motorspannung durch die Messeinrichtungen 11 und 12 gemessen und durch den Microcontroller 9 erfasst und verarbeitet. Aus den Messwerten und zumindest einer Motorkenngröße berechnet der Microcontroller 9 die benötigte Motorlaufzeit, um den gewünschten Kolbenhub zu erzeugen. Als Motorkenngrößen werden zweckmäßig der Ankerwiderstand sowie eine empirisch bestimmbare Motorkonstante, welche geometrische Einflussgrößen der Spulenanordnung, Lagerwiderstände und dergleichen erfasst, berücksichtigt. Wird die errechnete Motorlaufzeit erreicht, unterbricht der Microcontroller 9 den Motorstrom durch den Schalter 10.

Im dargestellten Beispiel umfasst die Steuerelektronik 8 weiterhin einen Temperatursensor 13, mit dem der Microcontroller 9 die Umgebungstemperatur bestimmt. Mit einer im Speicher des Microcontrollers 9 abgelegten Temperaturfunktion kann daraus zumindest eine Motorkenngröße temperaturabhängig berechnet werden.

Weiterhin entnimmt man, dass die Einrichtung 10 zur Unterbrechung des Motorstromes im Ausführungsbeispiel durch einen Metalloxid-Halbleiter-Feldeffekttransistor gebildet wird.

In dem vorliegenden Ausführungsbeispiel steuert der Microcontroller 9 den Motor 5 über die Einrichtung 10 mittels Pulsweitenmodulation an. Dabei wird diese dauerhaft in kurzer Folge immer wieder eingeschaltet, der Stromkreis für einen kurzen Zeitabschnitt geschlossen gehalten und durch die Einrichtung 10 danach wieder abgeschaltet. So lange der Stromkreis geschlossen ist, liegt die gesamte Spannung an. Wenn der Stromkreis geöffnet ist, liegt gar keine Spannung über dem Verbraucher an. Durch Wahl des Verhältnisses zwischen den Zeiten, in denen der Schalter ein- bzw. ausgeschaltet ist, kann die effektive mittlere Leistung des Stromkreises eingestellt werden. Wählt man die Frequenz, mit der die Ein- und Ausschaltvorgänge stattfinden, hinreichend groß, wirkt diese Art der Spannungsversorgung auf einen elektrisch trägen Verbraucher, wie zum Beispiel einen Elektromotor, als ob dieser mit einer konstanten Spannung, deren Höhe gegenüber der Versorungsspannung der Primärstromquelle 7 um das Verhältnis der Zeit mit eingeschaltetem Schalter zur Gesamtzeit verringert ist, versorgt würde.

Figur 3 zeigt beispielhaft den zeitlichen Verlauf der Sollspannung während eines Spendevorgangs. Während einer Anlaufphase I wird die Sollspannung stetig erhöht. Dabei kann der Wert bis zum technisch möglichen Maximum erhöht werden. Aufgrund der kurzen Dauer der Anlaufphase - üblicherweise etwa 50 ms - ist eine Beschädigung des Motors 5 durch zu große Ströme oder Spannungen ausgeschlossen. Durch die hohe maximale Spannung wird sichergestellt, dass der Motor 5 zuverlässig in der dafür vorgesehenen Anlaufphase I in Gang gesetzt wird. An die Anlaufphase I schließt sich die Betriebsphase II an. Während dieser wird die Pulsweitenmodulation so geregelt, dass sich eine konstante Sollspannung einstellt. Die Überprüfung der tatsächlichen Motorspannung geschieht dabei alle 10 ms während der Betriebsphase II und wird durch die Spannungsmesseinrichtung 12 ausgeführt. Durch die Regelung soll die Motorspannung konstant gehalten werden, auch wenn sich beispielsweise der elektrische Widerstand des Motors 5 durch Erwärmung während der Betriebsphase II ändert. Die Betriebsphase II endet, wenn die vom Microcontroller 9 errechnete Motorlaufzeit erreicht ist. Dann wird der Motorstrom unterbrochen.

## Patentansprüche

1. Verfahren zur dosierten Abgabe von Schmierfett mittels eines Schmierstoffspenders (1), der eine mit Schmierfett (2) gefüllte Schmierstoffkartusche (3) mit einem Kolben (4) zum Ausdrücken des Schmierfetts (2), eine von einem Gleichstrom-Getriebemotor (5) angetriebene Spindel (6) zur Bewegung des Kolbens (4), eine Spannungsquelle (7) und eine Steuerelektronik (8) zur Ansteuerung des Motors (5) mit einem Microcontroller (9) und eine Einrichtung (10) zur Unterbrechung des durch den Motor (5) fließenden Motorstromes aufweist,
wobei der Motor (5) von der Steuerelektronik (8) in einstellbaren Zeitintervallen in Betrieb gesetzt wird und durch eine Kolbenbewegung mit einem definierten Kolbenhub eine Spendemittelteilmenge aus der Kartusche (3) ausgedrückt wird,
wobei während des Motorbetriebs der Motorstrom und die Motorspannung gemessen werden und mit den Strom- und Spannungsmesswerten sowie zumindest einer Motorkenngröße die Motorlaufzeit berechnet wird, die zur Erzeugung des Kolbenhubs benötigt wird,
wobei die über dem Motor abfallende Spannung über einen Regelkreis auf einen Sollwert eingestellt wird,
wobei der Motorstrom unterbrochen wird, wenn die Motorbetriebszeit die errechnete Motorlaufzeit erreicht, wobei der Motor nach Ablauf der Betriebsphase nicht zur Abbremsung kurzgeschlossen wird.

2. Verfahren nach Anspruch 1, **dadurch gekennzeichnet, dass** die Umgebungstemperatur gemessen und mit einer in der Steuerelektronik (8) abgespeicherten Temperaturfunktion zumindest eine temperaturabhängige Motorkenngröße berechnet wird.

3. Verfahren nach Anspruch 1 oder 2, **dadurch gekennzeichnet, dass** als Einrichtung (10) zur Unterbrechung des durch den Motor fließenden Motorstromes ein Feldeffekttransistor verwendet wird.

4. Verfahren nach einem der Ansprüche 1 bis 3, **dadurch gekennzeichnet, dass** in einer Betriebsphase während des Motorlaufes die über dem Motor abfallende Spannung mittels Pulsweitenmodulation auf einen Sollwert eingestellt wird.

5. Verfahren nach Anspruch 4, **dadurch gekennzeichnet, dass** die tatsächliche Motorspannung in kurzen Zeitabständen gemessen wird.

6. Verfahren nach Anspruch 4 oder 5, **dadurch gekennzeichnet, dass** während einer der Betriebsphase vorangehenden Anlaufphase ein höherer Spannungswert als die Sollspannung der Betriebsphase an den Motor (5) angelegt wird.

7. Verfahren nach einem der Ansprüche 4 bis 6, **dadurch gekennzeichnet, dass** die Sollspannung während der Betriebsphase abhängig vom Typ der Schmierstoffkartusche (3) gewählt wird.

## Claims

1. A method for the metered dispensing of lubricating grease by means of a lubricant dispenser (1) which comprises a lubricant cartridge (3) filled with lubricating grease (2) with a piston (4) for expressing the lubricating grease (2), a spindle (6) which is driven by a DC drive motor (5) for moving the piston (4), a voltage source (7) and an electronic control system (8) for controlling the motor (5) using a microcontroller (9) and a device (10) for interrupting the motor current flowing through the motor (5),
wherein the motor (5) is set in operation by the electronic control system (8) at adjustable time intervals and a partial quantity of the dispensed product is expressed from the cartridge (3) by a piston movement with a defined piston stroke,
wherein the motor current and the motor voltage are measured during operation of the motor, and the motor running time which is required for producing the piston stroke is calculated by means of the measurement values of the current and voltage and at least one motor characteristic,
wherein the voltage dropping across the motor is adjusted to a set value via a control circuit,
wherein the motor current is interrupted when the motor operating time reaches the calculated motor running time, wherein the motor is not short-circuited for braking after the operating phase has passed.

2. The method according to claim 1, **characterised in that** the ambient temperature is measured and at least one temperature-dependent motor characteristic is calculated using a temperature function stored in the electronic control system (8).

3. The method according to claim 1 or 2, **characterised in that** a field-effect transistor is used as a device (10) for interrupting the motor current flowing through the motor.

4. The method according to one of claims 1 to 3, **characterised in that** during an operating phase, when the motor is running, the voltage dropping across the motor is adjusted to a set value by means of pulse width modulation.

5. The method according to claim 4, **characterised in that** the actual motor voltage is measured at short time intervals.

6. The method according to claim 4 or 5, **characterised in that** during a start-up phase prior to the operating phase a higher voltage value is applied to the motor (5) than the set voltage of the operating phase.

7. The method according to one of claims 4 to 6, **characterised in that** during the operating phase the set voltage is selected as a function of the type of lubricant cartridge (3).

## Revendications

1. Procédé pour la distribution dosée de graisse lubrifiante au moyen d'un distributeur (1) de lubrifiant, qui comporte une cartouche (3) de lubrifiant remplie de graisse lubrifiante (2), avec un piston (4) pour expulser la graisse lubrifiante (2), une broche (6) entraînée par un motoréducteur (5) à courant continu, pour déplacer le piston (4), une source de tension (7) et un système électronique de commande (8) pour amorcer le moteur (5), avec un microcontrôleur (9) et un système (10) destiné à interrompre le courant moteur circulant à travers le moteur (5),
le moteur (5) étant mis en fonctionnement par le système électronique de commande (8) à des intervalles de temps réglables et par un déplacement du piston à une certaine course du piston, une quantité partielle de produit distribué étant expulsée hors de la cartouche (3),
pendant le fonctionnement du moteur, le courant moteur et la tension moteur étant mesurés et avec les valeurs mesurées pour le courant et la tension, ainsi qu'avec au moins un paramètre caractéristique du moteur, le temps de marche du moteur qui est requis pour générer la course du piston étant calculé,
la tension chutant par l'intermédiaire du moteur étant réglée par un circuit de réglage à une valeur de consigne,
le courant moteur étant interrompu lorsque le temps de fonctionnement du moteur atteint le temps de marche du moteur, après écoulement de la phase de fonctionnement, le moteur n'étant pas court-circuité pour le freinage.

2. Procédé selon la revendication 1, **caractérisé en ce que** la température ambiante est mesurée et avec une fonction de température mémorisée dans le système électronique de commande (8), au moins un paramètre caractéristique du moteur dépendant de la température est calculé.

3. Procédé selon la revendication 1 ou 2, **caractérisé en ce qu'**en tant que système (10) destiné à interrompre le courant moteur circulant à travers le moteur, il est utilisé un transistor à effet de champ.

4. Procédé selon l'une quelconque des revendications 1 à 3, **caractérisé en ce que** dans une phase de fonctionnement en cours de marche du moteur, la tension chutant part l'intermédiaire du moteur est réglée à une valeur de consigne au moyen d'une modulation d'impulsions en largeur.

5. Procédé selon la revendication 4, **caractérisé en ce que** la tension effective du moteur est mesurée à de brefs intervalles de temps.

6. Procédé selon la revendication 4 ou 5, **caractérisé en ce que** pendant une phase de démarrage précédant la phase de fonctionnement, une valeur de tension plus élevée que la tension de consigne de la phase de fonctionnement est appliquée au moteur (5).

7. Procédé selon l'une quelconque des revendications 4 à 6, **caractérisé en ce que** pendant la phase de fonctionnement, la tension de consigne est sélectionnée en fonction du type de la cartouche (3) de lubrifiant.
